# EUROPEAN PATENT APPLICATION

(11) **EP 2 025 652 A2**
(43) Date of publication of application: **18.02.2009**
(21) Application number: 06841802.9
(22) Date of filing: 14.12.2006
(51) Int. Cl.: C04B 11/05, F26B 17/10

(54) **METHOD FOR OBTAINING STABILISED ANHYDRITE III**

(30) Priority: 13.01.2006 ES 200600084; 15.06.2006 ES 200601612
(71) Applicant: Palacios Gazules, Christian, 17600 Figueres (ES); Palacios Gazules, José Maria, 17600 Figueres (Girona) (ES); Palacios Gazules, Sergio, 17600 Figueres (ES)
(72) Inventor: Palacios Gazules, Christian, 17600 Figueres (ES); Palacios Gazules, José Maria, 17600 Figueres (Girona) (ES); Palacios Gazules, Sergio, 17600 Figueres (ES)
(74) Representative: Roman, Alexis
(86) International application number: PCT/ES2006/070195
(87) International publication number: WO 2007/080202

(57) **Abstract**

A process for obtaining stabilized anhydrite III comprising a drying step in a curved dryer at temperatures comprised between 100-400 °C, and a second stabilization step in a straight dryer where stabilization will be a function of the air speed within the dryer and the inlet and outlet temperatures of the product and in which there is a possibility of vaporising the product coming out of the straight dryer.

## Description

### OBJECT OF THE INVENTION

The present invention concerns a process for obtaining stabilized anhydrite III that is uniform regarding percent moisture in which moisture absorption of the final product is controlled.

### BACKGROUND OF THE INVENTION

Anhydrite III is a very unstable product due to the ease with which it absorbs water, and it tends to immediately transform into one of the hydrated forms of calcium sulphate, such as hemihydrate or dihydrate, therefore having no commercial value.

However, stabilization of said anhydrite III is very interesting due to its characteristics: it sets rapidly and reaches very high resistance in a very short space of time or by mixing it with other products, its fire resistance.

Processes for stabilizing anhydrite III are known, such as that described in patent FR2767816 in which the initial product is brought to a temperature of 220-350 °C and then rapidly cooled producing product shrinkage, or by particle collision.

The present invention concerns a process for anhydrite stabilization, in which uniform stabilization of anhydrite III is achieved by manipulating the outer portion of the particles, thus obtaining a product with water absorption between 0 and 12%. The final products will also be uniform, as well as subsequent mixtures with this product.

### DESCRIPTION OF THE INVENTION

The present invention refers to a process for obtaining stabilized anhydrite III.

The starting product is natural calcium sulphate or subproducts thereof from which stabilized anhydrite III is obtained after the process of the invention.

The starting product is a ground product with a particle size of 10 mm.

In a first drying step, these are first passed through a curved dryer at temperatures between 100-400°C and in a time range between 0.01-4 seconds, micronizing the product and obtaining non-stabilised anhydrite III. A dry product without crystallization water is thus achieved. The particle sizes obtained are between 0-200 microns.

Once this product is obtained it is transported through a double auger or by dry air to a dryer for an anhydrite III stabilizing step. The temperature of the product as it comes into the dryer is between 100-700 °C and the temperature as it comes out of the dryer is between 70-300 °C, the air speed inside the dryer is between 2m/sec and 100 m/sec.

All these variables together with the length and diameter of the dryer tube and the number of times it may be passed through the dryer will be varied within the limits just mentioned according to the degree of stabilization of the desired final product.

Additives such as for example water, diluted lime hydroxide or diluted cement, fluidizers or retardants may be added at the outlet of the first dryer by means of a vaporizer. The temperature of the product must remain between 2-100°C. The thermal shock occurring between the vaporized product temperature and the temperature of the particle exiting the first dryer causes the particle to become coated in a fine layer of the additive, such that the layer has a double function, one to protect anhydrite III and another that the temperature of the second dryer may be lower, thus saving energy.

The product obtained by the process of the invention brings commercial benefits due to the quality of the finished product in floor pavements, facade spraying, fireproof protection and also because it can save on fluidizers, retardants and other additives.

The present invention also has environmental advantages since no CO₂ is released to the atmosphere, in contrast to cement production.

The product obtained with the process of the invention mixed with cement provides exceptional results, such that it is possible to reduce the amount of cement produced.

Finally, the process of the invention can use waste material such as sulfogypsum, titanogypsum, phosphogypsum, etc.

### PREFERRED EMBODIMENT OF THE INVENTION

The starting product is natural calcium sulphate or subproducts thereof, which in this embodiment has a particle size of about 0-10 mm such that the particles first pass through a curved dryer thus micronizing the product and obtaining non-stabilized anhydrite III.

The non-stabilized anhydrite III is then introduced in the straight dryer with a 7 m/s airflow, reaching the particle at a temperature of 320 °C.

A second embodiment uses an airflow of 22 m/s, reaching the particle at a temperature of 400 °C, thus obtaining a product that hardly absorbs water and takes longer to reach high mechanical strength.

The mechanical strengths obtained in each one of the embodiments are the following:

| T/t | 5 h | 24 h | 3 days | 7 days | 28 days |
|---|---|---|---|---|---|
| 320°C | 21.8 MPa | 25 MPa | 32.2 MPa | 36.7 MPa | 54 MPa |
| 400°C | 13.7 MPa | 23.9 MPa | 29.9 MPa | 37.2 MPa | 57 MPa |

After 24 hours and at a temperature of 21 °C, the product obtained in the first embodiment, at 7 m/sec, shows 7% water absorption.

After 24 hours and at a temperature of 21 °C, the final product obtained in the second embodiment shows 5% water absorption.

Greater resistance to setting is obtained with less need for additives under greater thermal protection, i.e. if the treatment is too intense.

If a uniform particle size is used with little thermal protection, almost no water absorption is obtained, with fast setting and mechanical strengths up to 60 MPa in 3 days.

In a third embodiment it is possible that when the product comes out of the straight dryer it is passed through a controlled moisture circuit so that a small outer layer of hemihydrate or dihydrate is formed.

Variations in materials, shapes, size and the arrangement of the component elements, described in a nonlimiting manner, do not alter the essence of this invention, this being sufficient for its reproduction by an expert.

## Claims

1. A process for obtaining stabilized anhydrite III **characterized in that** it comprises a drying step in a curved dryer at temperatures comprised between 100-400 °C in a time interval of between 0.01-4 seconds, and an anhydrite III stabilization step in a straight dryer with the product entering the dryer at a temperature of between 100-700 °C, and exiting the dryer at a temperature between 70-300 °C, and an air speed within the dryer between 2m/sec and 100 m/sec.

2. A process according to claim 1, **characterized in that** additives such as for example water, diluted lime hydroxide or diluted cement, fluidizers or retardants may be added at the outlet of the first dryer by means of a vaporizer.

3. A process according to claim 2, **characterized in that** the temperature of the additive is between 2-100 °C.
